# FASCICULE DE BREVET EUROPEEN

(11) **EP 3 874 329 B1**
(45) Date de publication et mention de la délivrance du brevet: **04.10.2023**
(21) Numéro de dépôt: 18803345.0
(22) Date de dépôt: 02.11.2018
(51) Int. Cl.: G03B 27/32, G03B 27/00, G11B 11/12, G11B 7/013

(54) **IMAGEUR ELECTRONIQUE ET PROCÉDÉ ASSOCIÉ**
ELEKTRONISCHER BILDGEBER UND VERFAHREN DAFÜR
ELECTRONIC IMAGER AND METHOD THEREOF

(43) Date de publication de la demande: 08.09.2021
(73) Titulaire: Digifilm Corporation, 75018 Paris (FR)
(72) Inventeur: HAMPTON O'NEIL, Howard Robert, 75018 Paris (FR)
(74) Mandataire: Cabinet Nony
(86) Numéro de dépôt international: PCT/EP2018/079994
(87) Numéro de publication internationale: WO 2019/091865

(56) Documents cités:
- JP-A- 2005 043 770
- JP-A- 2008 250 193
- US-A1- 2003 142 619

## Description

La présente invention concerne les imageurs électroniques et leur utilisation, notamment pour la sauvegarde de données numériques sur un support photographique en bande.

Les contenus numériques, notamment cinématographiques, mais également issus de la surveillance ou de l'imagerie médicale, sont en plein essor, et les archiver sur le long terme tout en préservant leur qualité est un enjeu crucial, comme présenté dans le brevet FR 2 985 838.

L'archivage sur le long terme requiert que les données soient préservées fidèlement à leur forme et leur contenu d'origine, et qu'elles puissent être récupérées au format numérique dans un futur lointain, c'est-à-dire une ou plusieurs dizaines d'années, voire des centaines d'années. Les moyens de récupération des données ne doivent pas seulement permettre un affichage sur écran, une impression sur papier, ou un autre système de sortie des données, mais aussi une récupération des données numériques sources.

Il est connu de sauvegarder des données numériques sur un support photographique, en les imageant, c'est-à-dire en reproduisant les données sur le support sous forme de pixels constituant des images.

Ces supports peuvent s'altérer au cours du temps, selon les conditions dans lesquelles ils sont conservés. En outre, le mouvement inhérent du support au moment de l'enregistrement et de la lecture des données peut être source d'erreur.

L'enregistrement des données se fait le plus souvent en utilisant un imageur électronique qui est de préférence de type Digital Light Projector (DLP).

Un imageur est composé d'une ou plusieurs matrices de micro-miroirs dites Digital micro-Mirror Device (DMD) en anglais, en général trois matrices.

De manière connue en soi, un imageur électronique comporte au moins une matrice de micro-miroirs. La demande US 2005/0219470 divulgue un imageur utilisant au moins deux matrices avec différentes résolutions pouvant être modifiées par un changement de fréquence. JP2005043770 divulgue un imageur électronique pour imager un support photographique, comportant au moins une matrice de micro-miroirs dont chacun est adapté à réfléchir, lors d'un changement de position, un faisceau lumineux provenant d'au moins une source de lumière vers un élément optique de projection.

Une matrice de micro-miroirs fonctionne en faisant changer d'état tous les miroirs, c'est-à-dire tous les pixels, qui sont systématiquement ramenés à un état zéro puis à un nouvel état. Chaque instruction de basculement des miroirs implique deux changements d'état, ou transitions, qui sont appliqués sur l'ensemble des miroirs : une première remise à zéro puis une mise au niveau requis. En général, le changement de position des micro-miroirs est commandé par un signal modulé par une modulation de largeur d'impulsion, ou « *pulse-width modulation* » (PWM) en anglais. Les micro-miroirs changent de position à une fréquence de basculement de référence, implémentée par le fabricant de l'imageur dans un contrôleur de celui-ci. Cette fréquence de référence est par exemple de l'ordre de 150 kHz, ce qui permet de décrire 65 000 niveaux par composante de couleur.

Plus le nombre de fois où un micro-miroir est dans l'état « on-state » sur une période donnée est grand, plus le niveau d'intensité reproduit est élevé, par accroissement de l'énergie transmise par unité de temps lors de la projection sur la lentille. Trop de vibrations liées à ces multiples changements d'état peuvent créer du bruit lumineux qui va gêner la précision en produisant entre les pixels des traînées de lumière, dues à des rayons divertis, imperceptibles sur le support mais gênantes lors de la récupération des données.

Dans le cas d'une identification précise de niveaux programmés de lumière parmi un nombre prédéfini de niveaux, il est important d'une part d'identifier avec précision les différents niveaux programmés par miroir, et d'autre part de conserver un niveau de noir, correspondant à un état « off-state » permanent, suffisamment net, c'est-à-dire sans bruit inutile. En effet, cette deuxième contrainte est importante à considérer pour pouvoir distinguer avec précision les niveaux programmés dans la lumière à imager sur le support, le niveau du noir que l'on peut atteindre étant déterminant pour la qualité de la définition des autres niveaux.

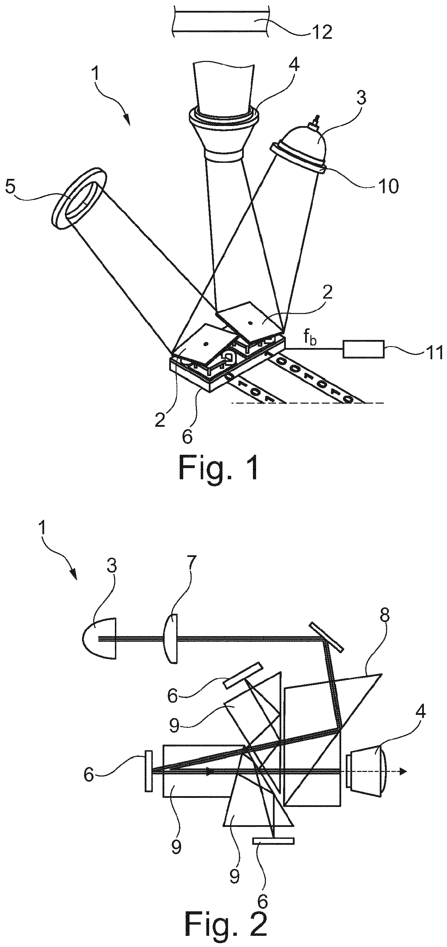

La figure 2 illustre schématiquement un imageur électronique 1 doté de trois matrices 6 de micro-miroirs, chacune traitant une composante de couleur rouge, vert ou bleu. La lumière est projetée par une lampe 3 traversant un condenseur 7 et parvenant à un prisme de réflexion interne TIR 8 qui dirige la lumière vers les différentes matrices 6. Avant d'atteindre les matrices DMD, la lumière passe par trois prismes 9 permettant de séparer les composantes de couleur rouge, vert ou bleu, pour qu'il n'y ait qu'une seule composante par matrice, puis la lumière renvoyée par chaque matrice est combinée avec celles renvoyées par les autres pour parvenir enfin à une lentille de projection 4.

Ainsi, de manière connue, pour l'enregistrement des données, les trois DMD d'un DLP sont utilisés pour imager les données dans chacun des plans superposés du support, représentant respectivement les niveaux de rouge, vert et bleu, chaque pixel ayant une valeur de composante de la couleur dans le plan associé. Mais cela rend difficile l'obtention de la même image dans les trois plans. Pour remédier à cela, il est possible d'augmenter la profondeur de champ de l'imageur, mais cela conduit à des problèmes de non homogénéité de l'éclairage.

Il existe donc un besoin pour perfectionner les imageurs électroniques, notamment dans le but de la sauvegarde de données numériques sur un support photographique, afin de réduire le bruit lumineux lors de l'enregistrement des données.

L'invention a pour but de répondre à ce besoin et elle y parvient, selon l'un de ses aspects, grâce à un imageur électronique pour imager un support photographique, comportant au moins une matrice de micro-miroirs dont chacun est adapté à réfléchir, lors d'un changement de position, un faisceau lumineux provenant d'au moins une source de lumière vers un élément optique de projection, le changement de position des micro-miroirs étant commandé par un signal modulé à une fréquence de basculement des micro-miroirs comprise entre 1 Hz et 100 kHz.

Par « imager », il faut comprendre l'action de reproduire, sur un support photographique, des données numériques sous forme de pixels constituant des images.

Grâce à cette plage de valeurs possibles pour la fréquence de basculement, inférieures à la fréquence de référence connue, le nombre de changements de position des micro-miroirs en est réduit, le bruit lumineux issu des changements de position des micro-miroirs est ainsi limité, et la précision d'enregistrement sur le support photographique s'en trouve améliorée.

Grâce à la diminution de la fréquence de basculement, seulement 32 ou 128, voire 8 ou 16 niveaux de lumière différents peuvent être atteints, au lieu des 65000 niveaux possibles des imageurs électroniques selon l'art antérieur. En effet, dans ce dernier cas, la lumière étant constamment présente, le support photographique est témoin de tous les événements, y compris les états « off-state » pourtant destinés à ne rien lui envoyer par diffusion, réfraction ou diffraction. L'invention permet de mieux faire ressortir la valeur du noir correspondant à un état « off-state » permanent, en limitant au maximum l'intensité résiduelle associée à la valeur du noir. Les états « off-state » sont ainsi minimisés au maximum en réduisant la fréquence de basculement.

L'invention offre ainsi une solution permettant d'enregistrer des données numériques sur un support photographique de façon pérenne.

Par exemple, en travaillant sur 16 niveaux de gris, sur une période donnée, on bascule les micro-miroirs seulement 16 fois par image, au lieu d'environ six-mille par image, c'est-à-dire 150 000 fois par seconde à 24 images/seconde, dans les imageurs connus, soit près de 400 fois moins.

De préférence, la fréquence de basculement des micro-miroirs est inférieure à 50 kHz, mieux à 10 kHz, encore mieux à 5 kHz.

De préférence, la fréquence de basculement *f_{b}* des micro-miroirs est inférieure ou égale à 1 kHz. La modulation du signal commandant les micro-miroirs est ainsi de très basse fréquence. Les miroirs peuvent ainsi basculer une fois et rester dans cette position pendant une durée d'au moins 2 x 1/*f_{b}* secondes.

Le choix de la fréquence de basculement *f_{b}* peut obéir à une loi de commande prenant comme paramètres le nombre Nᵢ d'images par seconde et le nombre N_{g} de niveaux de gris souhaités pour imager le support, de préférence : *f_{b}* = 2 x N_{g} x Nᵢ. Le nombre d'images par seconde dépend, de manière connue, de la sensibilité du support, de la quantité de lumière projetée, et de la vitesse de la caméra physique.

Un contrôleur de l'imageur électronique, pilotant le changement de position des micro-miroirs, peut être configuré pour prendre en entrée le nombre Nᵢ d'images par seconde et le nombre N_{g} de niveaux de gris souhaités et pour calculer la fréquence de basculement *f_{b}.*

Dans une variante, les valeurs possibles prédéfinies de la fréquence de basculement peuvent être enregistrées dans le contrôleur de l'imageur électronique.

Dans ce cas, l'imageur électronique peut comporter un sélecteur pour sélectionner la fréquence de basculement des micro-miroirs parmi au moins deux valeurs prédéfinies, mieux parmi au moins cinq valeurs prédéfinies. Ceci permet de choisir de manière adaptée la fréquence de basculement des micro-miroirs selon l'application visée. Le sélecteur peut être un bouton ou un cadre digital permettant de sélectionner une valeur de fréquence.

Le signal modulé peut provenir d'un circuit additionnel synthétisant au moins une fréquence de basculement des micro-miroirs, le circuit additionnel se substituant à un contrôleur de l'imageur commandant le changement de position des micro-miroirs à une fréquence de référence, la sortie du circuit additionnel étant connectée à l'entrée commandant le changement de position des micro-miroirs.

Dans les imageurs connus, la fréquence de référence est typiquement supérieure à 100 kHz, notamment proche de 150 kHz.

Le circuit additionnel peut être configuré pour prendre en entrée le nombre Nᵢ d'images par seconde et le nombre N_{g} de niveaux de gris souhaités et pour calculer la fréquence de basculement *f_{b}.*

Dans une variante, le circuit additionnel est adapté à recevoir une instruction de choix d'une valeur de fréquence de basculement parmi plusieurs valeurs prédéfinies, par exemple au moins deux, voire au moins cinq valeurs prédéfinies.

L'imageur électronique est de préférence configuré pour bloquer et/ou éteindre au moins une partie du faisceau lumineux provenant de ladite au moins une source de lumière au moins pendant une partie de la durée du changement de position des micro-miroirs.

L'extinction ou le blocage de lumière peut s'effectuer pendant toute la durée du changement de position des micro-miroirs.

L'extinction ou le blocage de lumière peut durer entre 2 et 110 nanosecondes.

L'extinction ou le blocage de lumière peut s'effectuer avec une certaine avance et/ou un certain retard par rapport au changement de position des micro-miroirs.

L'imageur électronique peut comporter au moins un obturateur électronique agencé pour bloquer, lorsqu'activé, au moins une partie du faisceau lumineux.

La présence dudit au moins un obturateur filtre ainsi la lumière parasite et évite un transfert de bruit non désirable, les micro-miroirs restant stables en présence de lumière et ne bougeant que dans le noir. Ledit au moins un obturateur est avantageusement synchronisé avec les micro-miroirs. La fréquence réduite de basculement des micro-miroirs permet de faire fonctionner plus facilement un tel obturateur, qui peut suivre le rythme de basculement des miroirs, ce qui est plus difficile dans le cas d'une fréquence de basculement de référence très élevée.

De préférence, ledit au moins un obturateur est de type électro-optique, notamment électro-chromique, à cellule de Kerr ou de Pockels. Ledit au moins un obturateur est avantageusement positionné entre la source de lumière et la matrice de micro-miroirs.

L'imageur électronique peut comporter un élément de contrôle de ladite au moins une source de lumière, configuré pour éteindre cette source au moins pendant une partie de la durée du changement de position des micro-miroirs. L'élément de contrôle peut être commandé par un signal provenant du contrôleur ou du circuit additionnel et envoyant une instruction d'extinction de la source.

La présence d'un élément de contrôle ou d'un obturateur permet de synchroniser le mouvement oscillatoire des micro-miroirs avec une absence de la lumière projetée sur ceux-ci pendant leur mouvement. L'élément de contrôle et/ou l'obturateur sont avantageusement configurés de telle manière que chaque fenêtre temporelle de changement de la position des micro-miroirs soit incluse dans une fenêtre temporelle au moins égale durant laquelle la lumière projetée est éteinte ou bloquée.

De préférence, l'imageur électronique comporte une seule matrice de micro-miroirs et trois sources de lumière.

L'imageur électronique peut comporter un obturateur unique pour les trois sources de lumière. Dans une variante, l'imageur électronique comporte trois obturateurs, chacun étant alors situé entre l'une des trois sources et la matrice de micro-miroirs.

L'invention a encore pour objet un ensemble comprenant un support photographique et un imageur électronique selon l'invention, tel que défini ci-dessus.

L'invention a également pour objet, selon un autre de ses aspects, un procédé de reproduction d'images sur un support photographique, notamment en bande, de préférence une bande de film 35 mm, pour la sauvegarde de données numériques issues de la conversion des images, le procédé utilisant un imageur électronique selon l'invention, tel que défini ci-dessus, pour projeter une image sur ledit support.

Le support photographique comportant trois plans superposés correspondant respectivement à des niveaux de rouge, vert et bleu, une seule matrice de micro-miroirs et trois sources de lumière, avec une source pour chaque plan respectif du support, peuvent être utilisées.

De préférence, on sélectionne la source correspondant au plan de la composante couleur désirée pour illuminer les micro-miroirs de la matrice pendant leur changement de position.

L'élément de contrôle des sources peut être utilisé pour éteindre les deux sources non sélectionnées.

Selon un autre encore de ses aspects, l'invention a encore pour objet un procédé d'utilisation d'un imageur électronique comportant au moins une matrice de micro-miroirs dont chacun est adapté à réfléchir, lors d'un changement de position, un faisceau lumineux provenant d'au moins une source de lumière vers un élément optique de projection, le procédé comprenant le blocage d'au moins une partie du faisceau lumineux provenant de ladite au moins une source de lumière et/ou l'extinction de celle-ci, au moins pendant une partie de la durée du changement de position des micro-miroirs.

Le blocage d'au moins une partie du faisceau lumineux est avantageusement réalisé par un obturateur électronique.

L'invention a également pour objet, selon un autre de ses aspects, un procédé de modification d'un imageur électronique comportant au moins une matrice de micro-miroirs dont chacun est adapté à réfléchir, lors d'un changement de position, un faisceau lumineux provenant d'au moins une source de lumière vers un élément optique de projection, le procédé comportant :
- la reprogrammation d'un contrôleur de l'imageur commandant le changement de position des micro-miroirs à une fréquence de référence en vue de diminuer cette fréquence ; ou
- la substitution d'un contrôleur de l'imageur commandant le changement de position des micro-miroirs à une fréquence de référence par un circuit additionnel synthétisant au moins une valeur possible de la fréquence de basculement des micro-miroirs, comprise entre 1 Hz et 100 kHz, la sortie du circuit additionnel étant connectée à l'entrée commandant le changement de position des micro-miroirs.

L'invention a encore pour objet, selon un autre de ses aspects, un imageur électronique comportant au moins une matrice de micro-miroirs dont chacun est adapté pour réfléchir, lors d'un changement de position, un faisceau lumineux provenant d'au moins une source de lumière vers un élément optique de projection, l'imageur comportant en outre au moins un élément de blocage ou de contrôle agencé pour bloquer au moins une partie du faisceau lumineux provenant de ladite au moins source de lumière et/ou l'extinction de celle-ci, au moins pendant une partie de la durée du changement de position des micro-miroirs.

L'élément de blocage peut être un obturateur électronique agencé pour bloquer, lorsqu'activé, au moins une partie du faisceau lumineux provenant de ladite au moins source de lumière, au moins pendant une partie de la durée du changement de position des micro-miroirs.

En variante, un élément de contrôle de ladite au moins une source de lumière est configuré pour éteindre cette source au moins pendant une partie de la durée du changement de position des micro-miroirs.

L'imageur électronique peut comporter un obturateur électronique et un élément de contrôle tels que définis ci-dessus.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente un imageur électronique selon l'invention,
- la figure 2, précédemment décrite, représente schématiquement un imageur électronique selon l'art antérieur ayant trois matrices de micro-miroirs, et
- la figure 3 illustre le principe de fonctionnement de l'imageur modifié selon l'invention.

On a représenté à la figure 1 un imageur électronique 1 projetant sur un support 12 et comportant une matrice 6 de micro-miroirs 2. Une source de lumière 3 illumine ces micro-miroirs 2 qui réfléchissent, selon leur position, le faisceau lumineux soit vers un élément optique de projection 4, par exemple une lentille, soit vers un élément absorbant 5.

La position des micro-miroirs peut correspondre à un état « on-state » où les micros-miroirs sont dirigés vers la source de lumière 3, ou à un état « off-state », où les micros-miroirs sont détournés du faisceau lumineux. Ces états « on-state » et « off-state » sont relatifs aux niveaux logiques 1 et 0 du pixel, respectivement.

L'élément optique de projection 4 projette sur le support 12 au moins une partie du faisceau lumineux réfléchi lorsque les micro-miroirs 2 sont dans l'état « on-state ».

L'élément absorbant 5 absorbe au moins une partie du faisceau lumineux réfléchi dans l'état « off-state » des micro-miroirs 2. Cet élément absorbant est par exemple un tissu de velours noir lorsque les sources de lumière sont de type LED, ce type d'élément absorbant étant suffisant pour absorber le surplus d'énergie diffusée par les miroirs. L'élément absorbant peut être un radiateur dans le cas d'une source de lumière très chaude, par exemple une lampe à mercure.

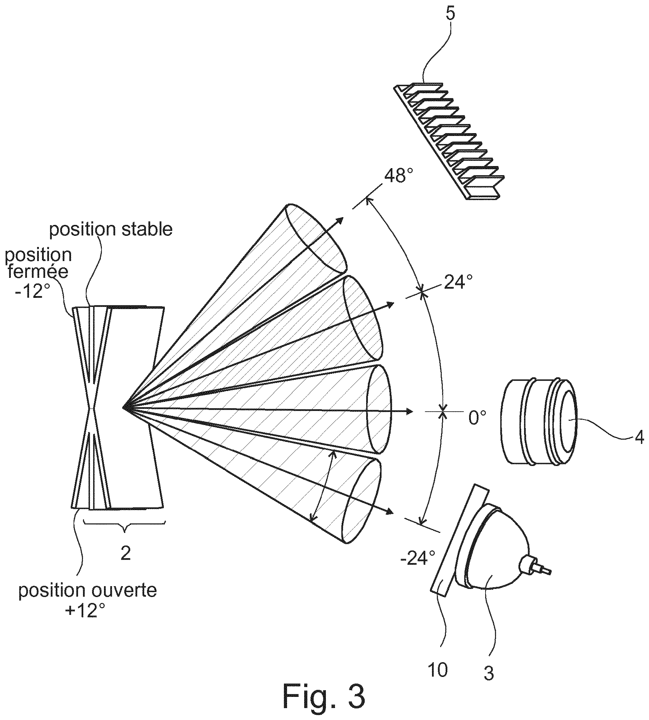

Comme illustré à la figure 3, les micro-miroirs 2 basculent à plus ou moins 12° par rapport à une position stable correspondant à un état « flat-state ». Les micro-miroirs 2 réfléchissent la lumière incidente à 24° vers la lentille de projection 4 lorsqu'ils sont à l'état « on-state », et à 72° vers l'élément absorbant 5 lorsqu'ils sont à l'état « off-state ».

L'imageur 1 comporte un contrôleur pilotant le changement de position des micro-miroirs 2. Comme décrit précédemment, le changement de position des micro-miroirs 2 est commandé par un signal modulé à une fréquence de basculement *f_{b}* des micro-miroirs comprise entre 1 kHz et 100 kHz, notamment inférieure à 1 kHz. Par exemple, pour un enregistrement à 24 images/seconde et avec 16 niveaux de gris, la fréquence de basculement *f_{b}* des micro-miroirs est fixée à 768 Hz.

Dans un premier mode de réalisation de l'invention, les valeurs possibles prédéfinies de la fréquence de basculement *f_{b}* sont enregistrées dans un contrôleur de l'imageur électronique 1, ledit contrôleur pilotant le changement de position des micro-miroirs 2 et ayant reprogrammé en conséquence. L'imageur électronique comporte dans ce cas avantageusement un sélecteur pour sélectionner la fréquence de basculement *f_{b}* des micro-miroirs 2 parmi au moins deux valeurs prédéfinies, mieux parmi au moins cinq valeurs prédéfinies.

Dans une variante, représentée à la figure 1, le signal modulé provient d'un circuit additionnel 11 synthétisant des valeurs prédéfinies de la fréquence de basculement *f_{b}* des micro-miroirs 2, ce circuit additionnel 11 se substituant au contrôleur, en branchant la sortie du circuit additionnel 11 à l'entrée commandant le changement de position des micro-miroirs. De préférence, le circuit additionnel 11 est adapté à recevoir une instruction de choix d'une valeur de fréquence de basculement *f_{b}* parmi plusieurs valeurs prédéfinies.

De préférence et comme visible à la figure 3, un obturateur électronique 10, par exemple de type électro-optique, est placé devant la source de lumière 3. Cet obturateur 10 est configuré pour bloquer, lorsqu'activé, au moins une partie du faisceau lumineux, pendant au moins une partie de la durée du basculement des micro-miroirs 2, voire pendant toute la durée du changement de position des micro-miroirs 2.

L'imageur électronique 1 peut comporter un élément de contrôle des sources de lumière, non illustré, configuré pour éteindre l'une ou l'autre des sources au moins pendant une partie de la durée du changement de position des micro-miroirs 2, voire pendant toute la durée du changement de position des micro-miroirs 2.

Le blocage ou l'extinction de la lumière peut être fait avec une certaine avance et/ou un certain retard par rapport au changement de position des micro-miroirs 2.

De préférence, l'imageur électronique 1 selon l'invention ne comporte qu'une seule matrice 6 de micro-miroirs 2. Trois sources de lumière 3 sont avantageusement utilisées, une pour chaque niveau de couleur rouge, vert et bleu correspondant aux trois plans superposés du support 12. Pour des fins de clarté, une seule source de lumière 3 a été représentée à la figure 1. Dans ce cas, et contrairement à l'art antérieur, il n'y a plus besoin de prisme interposé entre les sources de lumière 3 et la matrice 6 de micro-miroirs 2.

Il est particulièrement avantageux d'utiliser l'imageur électronique 1 selon l'invention pour reproduire des images sur un support photographique 12, notamment en bande, de préférence une bande de film 35 mm, pour la sauvegarde de données numériques issues de la conversion des images.

Pendant le changement de position des micro-miroirs 2, la source correspondant au plan de la composante de couleur désirée est sélectionnée. Les faisceaux lumineux des deux autres sources peuvent être bloqués par l'obturateur 10 placé devant chacune d'entre elles, ou les sources peuvent être éteintes par un élément de contrôle.

## Revendications

1. Imageur électronique (1) pour imager un support photographique, comportant au moins une matrice (6) de micro-miroirs (2) dont chacun est adapté à réfléchir, lors d'un changement de position, un faisceau lumineux provenant d'au moins une source de lumière (3) vers un élément optique de projection (4), le changement de position des micro-miroirs (2) étant commandé par un signal modulé à une fréquence de basculement (*f_{b}*) des micro-miroirs comprise entre 1 Hz et 100 kHz.

2. Imageur électronique (1) selon la revendication 1, dans lequel la fréquence de basculement (*f_{b}*) des micro-miroirs (2) est inférieure ou égale à 50 kHz, mieux à 10 kHz, encore mieux à 5 kHz.

3. Imageur électronique (1) selon la revendication 1 ou 2, dans lequel la fréquence de basculement (*f_{b}*) des micro-miroirs (2) est inférieure ou égale à 1 kHz.

4. Imageur électronique (1) selon l'une quelconque des revendications 1 à 3, comportant un sélecteur pour sélectionner la fréquence de basculement (*f_{b}*) des micro-miroirs (2) parmi au moins deux valeurs prédéfinies.

5. Imageur électronique (1) selon l'une quelconque des revendications 1 à 4, dans lequel le signal modulé provient d'un circuit additionnel (11) synthétisant au moins une fréquence de basculement (*f_{b}*) des micro-miroirs (2), le circuit additionnel (11) se substituant à un contrôleur de l'imageur commandant le changement de position des micro-miroirs (2) à une fréquence de référence, la sortie du circuit additionnel (11) étant connectée à l'entrée commandant le changement de position des micro-miroirs (2), imageur dans lequel le circuit additionnel (11) est adapté à recevoir une instruction de choix d'une valeur de fréquence de basculement (*f_{b}*) parmi plusieurs valeurs prédéfinies.

6. Imageur électronique (1) selon l'une quelconque des revendications précédentes, étant configuré pour bloquer et/ou éteindre au moins une partie du faisceau lumineux provenant de ladite au moins une source de lumière (3) au moins pendant une partie de la durée du changement de position des micro-miroirs (2), l'extinction ou le blocage s'effectuant de préférence pendant toute la durée du changement de position des micro-miroirs (2).

7. Imageur électronique (1) selon la revendication 6, l'extinction ou le blocage s'effectuant avec une certaine avance et/ou un certain retard par rapport au changement de position des micro-miroirs (2).

8. Imageur selon l'une des revendications 6 et 7, comportant au moins un obturateur électronique (10) agencé pour bloquer, lorsqu'activé, au moins une partie du faisceau lumineux.

9. Imageur électronique (1) selon l'une quelconque des revendications précédentes, comportant un élément de contrôle de ladite au moins une source de lumière, configuré pour éteindre cette source au moins pendant une partie de la durée du changement de position des micro-miroirs (2).

10. Imageur électronique (1) selon l'une quelconque des revendications précédentes, comportant une seule matrice (6) de micro-miroirs (2) et trois sources de lumière.

11. Ensemble comprenant un support photographique (12) et un imageur électronique (1) selon l'une quelconque des revendications 1 à 10.

12. Procédé de reproduction d'images sur un support photographique (12), notamment en bande, de préférence une bande de film 35 mm, pour la sauvegarde de données numériques issues de la conversion des images, le procédé utilisant un imageur électronique (1) selon l'une quelconque des revendications 1 à 10 pour projeter une image sur ledit support.

13. Procédé selon la revendication précédente, dans lequel, le support photographique (12) comporte trois plans superposés correspondant respectivement à des niveaux de rouge, vert et bleu, et dans lequel une seule matrice (6) de micro-miroirs (2) et trois sources de lumière, avec une source pour chaque plan respectif du support (12), sont utilisées, procédé dans lequel on sélectionne la source correspondant au plan de la composante couleur désirée pour illuminer les micro-miroirs (2) de la matrice (6) pendant leur changement de position.

14. Procédé d'utilisation d'un imageur électronique (1) selon l'une quelconque des revendications 1 à 10, comportant au moins une matrice (6) de micro-miroirs (2) dont chacun est adapté à réfléchir, lors d'un changement de position, un faisceau lumineux provenant d'au moins une source de lumière (3) vers un élément optique de projection (4), le procédé comprenant le blocage d'au moins une partie du faisceau lumineux provenant de ladite au moins source de lumière (3) et/ou l'extinction de celle-ci, au moins pendant une partie de la durée du changement de position des micro-miroirs (2).

15. Procédé de modification d'un imageur électronique (1) selon l'une quelconque des revendications 1 à 10 comportant au moins une matrice (6) de micro-miroirs (2) dont chacun est adapté à réfléchir, lors d'un changement de position, un faisceau lumineux provenant d'au moins une source de lumière (3) vers un élément optique de projection (4), le procédé comportant :
- la reprogrammation d'un contrôleur de l'imageur (1) commandant le changement de position des micro-miroirs (2) à une fréquence de référence en vue de diminuer cette fréquence ; ou
- la substitution d'un contrôleur de l'imageur (1) commandant le changement de position des micro-miroirs (2) à une fréquence de référence par un circuit additionnel (11) synthétisant au moins une valeur possible de la fréquence de basculement (*f_{b}*) des micro-miroirs (2), comprise entre 1 Hz et 100 kHz, la sortie du circuit additionnel (11) étant connectée à l'entrée commandant le changement de position des micro-miroirs (2).

## Patentansprüche

1. Elektronischer Bildgeber (1) zum Abbilden von Bildern auf einem fotografischen Träger, umfassend mindestens eine Matrix (6) von Mikrospiegeln (2), von denen jeder dazu angepasst ist, bei einer Positionsänderung einen Lichtstrahl, der von mindestens einer Lichtquelle (3) stammt, zu einem optischen Projektionselement (4) zu reflektieren, wobei die Positionsänderung der Mikrospiegel (2) durch ein Signal gesteuert wird, das mit einer Kippfrequenz (*f_{b}*) der Mikrospiegel zwischen 1 Hz und 100 kHz moduliert wird.

2. Elektronischer Bildgeber (1) nach Anspruch 1, wobei die Kippfrequenz (*f_{b}*) der Mikrospiegel (2) kleiner als oder gleich 50 kHz, bevorzugter 10 kHz, noch bevorzugter 5 kHz, ist.

3. Elektronischer Bildgeber (1) nach Anspruch 1 oder 2, wobei die Kippfrequenz (*f_{b}*) der Mikrospiegel (2) kleiner als oder gleich 1 kHz ist.

4. Elektronischer Bildgeber (1) nach einem beliebigen der Ansprüche 1 bis 3, umfassend ein Auswahlmittel, um die Kippfrequenz (*f_{b}*) der Mikrospiegel (2) aus mindestens zwei vordefinierten Werten auszuwählen.

5. Elektronischer Bildgeber (1) nach einem beliebigen der Ansprüche 1 bis 4, wobei das modulierte Signal von einer Zusatzschaltung (11) stammt, die mindestens eine Kippfrequenz (*f_{b}*) der Mikrospiegel (2) synthetisiert, wobei die Zusatzschaltung (11) eine Steuereinheit des Bildgebers, die die Positionsänderung der Mikrospiegel (2) mit einer Referenzfrequenz steuert, ersetzt, wobei der Ausgang der Zusatzschaltung (11) mit dem Eingang, der die Positionsänderung der Mikrospiegel (2) steuert, verbunden ist, wobei die Zusatzschaltung (11) des Bildgebers dazu angepasst ist, einen Befehl für eine Wahl eines Kippfrequenzwerts (*f_{b}*) aus mehreren vordefinierten Werten zu empfangen.

6. Elektronischer Bildgeber (1) nach einem beliebigen der vorhergehenden Ansprüche, der dazu konfiguriert ist, mindestens einen Teil des Lichtstrahls, der von der mindestens einen Lichtquelle (3) stammt, mindestens während eines Teils der Dauer der Positionsänderung der Mikrospiegel (2) zu blockieren und/oder auszuschalten, wobei das Ausschalten oder das Blockieren vorzugsweise während der gesamten Dauer der Positionsänderung der Mikrospiegel (2) erfolgt.

7. Elektronischer Bildgeber (1) nach Anspruch 6, wobei das Ausschalten oder das Blockieren mit einem gewissen Vorlauf und/oder einer gewissen Verzögerung bezogen auf die Positionsänderung der Mikrospiegel (2) erfolgt.

8. Bildgeber nach einem der Ansprüche 6 und 7, umfassend mindestens eine elektronische Blende (10), die dazu eingerichtet ist, bei Aktivierung mindestens einen Teil des Lichtstrahls zu blockieren.

9. Elektronischer Bildgeber (1) nach einem beliebigen der vorhergehenden Ansprüche, umfassend ein Steuerelement für die mindestens eine Lichtquelle, das dazu konfiguriert ist, diese Quelle mindestens während eines Teils der Dauer der Positionsänderung der Mikrospiegel (2) auszuschalten.

10. Elektronischer Bildgeber (1) nach einem beliebigen der vorhergehenden Ansprüche, umfassend eine einzige Matrix (6) von Mikrospiegeln (2) und drei Lichtquellen.

11. Anordnung, die einen fotografischen Träger (12) und einen elektronischen Bildgeber (1) nach einem beliebigen der Ansprüche 1 bis 10 beinhaltet.

12. Verfahren zur Reproduktion von Bildern auf einem fotografischen Träger (12), insbesondere in Streifenform, vorzugsweise einem 35 mm-Filmstreifen, zur Speicherung von digitalen Daten, die aus der Umwandlung der Bilder resultieren, wobei das Verfahren einen elektronischen Bildgeber (1) nach einem beliebigen der Ansprüche 1 bis 10 verwendet, um ein Bild auf den Träger zu projizieren.

13. Verfahren nach dem vorhergehenden Anspruch, wobei der fotografische Träger (12) drei übereinanderliegende Ebenen umfasst, die jeweils Rot-, Grün- und Blauanteilen entsprechen, und wobei eine einzige Matrix (6) von Mikrospiegeln (2) und drei Lichtquellen, mit einer Quelle für jede jeweilige Ebene des Trägers (12), verwendet werden, wobei bei dem Verfahren die Quelle, die der Ebene der gewünschten Farbkomponente entspricht, ausgewählt wird, um die Mikrospiegel (2) der Matrix (6) während ihrer Positionsänderung zu beleuchten.

14. Verfahren zur Verwendung eines elektronischen Bildgebers (1) nach einem beliebigen der Ansprüche 1 bis 10, der mindestens eine Matrix (6) von Mikrospiegeln (2) umfasst, von denen jeder dazu angepasst ist, bei einer Positionsänderung einen Lichtstrahl, der von mindestens einer Lichtquelle (3) stammt, zu einem optischen Projektionselement (4) zu reflektieren, wobei das Verfahren das Blockieren mindestens eines Teils des Lichtstrahls, der von der mindestens einen Lichtquelle (3) stammt, und/oder das Ausschalten derselben mindestens während eines Teils der Dauer der Positionsänderung der Mikrospiegel (2) beinhaltet.

15. Verfahren zur Modifizierung eines elektronischen Bildgebers (1) nach einem beliebigen der Ansprüche 1 bis 10, der mindestens eine Matrix (6) von Mikrospiegeln (2) umfasst, von denen jeder dazu angepasst ist, bei einer Positionsänderung einen Lichtstrahl, der von mindestens einer Lichtquelle (3) stammt, zu einem optischen Projektionselement (4) zu reflektieren, wobei das Verfahren Folgendes umfasst:
- das Umprogrammieren einer Steuereinheit des Bildgebers (1), die die Positionsänderung der Mikrospiegel (2) mit einer Referenzfrequenz steuert, mit dem Ziel, diese Frequenz zu verringern; oder
- das Ersetzen einer Steuereinheit des Bildgebers (1), die die Positionsänderung der Mikrospiegel (2) mit einer Referenzfrequenz steuert, durch eine Zusatzschaltung (11), die mindestens einen möglichen Wert der Kippfrequenz (*f_{b}*) der Mikrospiegel (2), die zwischen 1 Hz und 100 kHz liegt, synthetisiert, wobei der Ausgang der Zusatzschaltung (11) mit dem Eingang, der die Positionsänderung der Mikrospiegel (2) steuert, verbunden ist.

## Claims

1. Electronic imager (1) for imaging a photographic medium, comprising at least one matrix array (6) of micro-mirrors (2) each of which is suitable for reflecting, during a change in position, a light beam originating from at least one light source (3) towards a projecting optical element (4), the change in position of the micro-mirrors (2) being commanded by a signal modulated at a switching frequency (*f_{b}*) of the micro-mirrors that is comprised between 1 Hz and 100 kHz.

2. Electronic imager (1) according to Claim 1, wherein the switching frequency (*f_{b}*) of the micro-mirrors (2) is lower than or equal to 50 kHz, better still than 10 kHz, and even better still than 5 kHz.

3. Electronic imager (1) according to Claim 1 or 2, wherein the switching frequency (*f_{b}*) of the micro-mirrors (2) is lower than or equal to 1 kHz.

4. Electronic imager (1) according to any one of Claims 1 to 3, comprising a selector for selecting the switching frequency (*f_{b}*) of the micro-mirrors (2) from at least two predefined values.

5. Electronic imager (1) according to any one of Claims 1 to 4, wherein the modulated signal originates from an additional circuit (11) that synthesizes at least one switching frequency (*f_{b}*) of the micro-mirrors (2), the additional circuit (11) replacing a controller of the imager that commands the change in position of the micro-mirrors (2) at a reference frequency, the output of the additional circuit (11) being connected to the input that commands the change in position of the micro-mirrors (2), in which imager the additional circuit (11) is suitable for receiving an instruction as to the choice of a value of the switching frequency (*f_{b}*) from a plurality of predefined values.

6. Electronic imager (1) according to any one of the preceding claims, being configured to block and/or turn off at least one portion of the light beam originating from said at least one light source (3) at least during a portion of the duration of the change in position of the micro-mirrors (2), the at least one portion of the light beam originating from said at least one light source (3) preferably being blocked or turned off throughout the duration of the change in position of the micro-mirrors (2).

7. Electronic imager (1) according to Claim 6, the at least one portion of the light beam originating from said at least one light source (3) being blocked or turned off with a certain advance and/or a certain delay with respect to the change in position of the micro-mirrors (2) .

8. Imager according to one of Claims 6 and 7, comprising at least one electronic shutter (10) arranged to block, when activated, at least one portion of the light beam.

9. Electronic imager (1) according to any one of the preceding claims, comprising an element for controlling said at least one light source, said element being configured to turn off this source at least during one portion of the duration of the change in position of the micro-mirrors (2).

10. Electronic imager (1) according to any one of the preceding claims, comprising a single matrix array (6) of micro-mirrors (2) and three light sources.

11. Assembly comprising a photographic medium (12) and an electronic imager (1) according to any one of Claims 1 to 10.

12. Method for reproducing images on a photographic medium (12), especially a strip-shaped photographic medium, and preferably a strip of 35 mm film, with a view to saving digital data resulting from image conversion, the method using an electronic imager (1) according to any one of Claims 1 to 10 to project an image onto said medium.

13. Method according to the preceding claim, wherein the photographic medium (12) comprises three superposed planes corresponding to red, green and blue levels, respectively, and wherein a single matrix array (6) of micro-mirrors (2) and three light sources, with one source for each respective plane of the medium (12), are used, in which method the source corresponding to the plane of the desired colour component is selected to illuminate the micro-mirrors (2) of the matrix array (6) during their change in position.

14. Method for using an electronic imager (1) according to any one of Claims 1 to 10, comprising at least one matrix array (6) of micro-mirrors (2) each of which is suitable for reflecting, during a change in position, a light beam originating from at least one light source (3) towards a projecting optical element (4), the method comprising blocking at least one portion of the light beam originating from said at least one light source (3) and/or turning off the latter, at least during one portion of the duration of the change in position of the micro-mirrors (2).

15. Method for modifying an electronic imager (1) according to any one of Claims 1 to 10, comprising at least one matrix array (6) of micro-mirrors (2) each of which is suitable for reflecting, during a change in position, a light beam originating from at least one light source (3) towards a projecting optical element (4), the method comprising:
- reprogramming a controller of the imager (1) that commands the change in position of the micro-mirrors (2) at a reference frequency with a view to decreasing this frequency; or
- replacing a controller of the imager (1) that commands the change in position of the micro-mirrors (2) at a reference frequency with an additional circuit (11) that synthesizes at least one possible value of the switching frequency (*f_{b}*) of the micro-mirrors (2), which value is comprised between 1 Hz and 100 kHz, the output of the additional circuit (11) being connected to the input that commands the change in position of the micro-mirrors (2).
